# EUROPEAN PATENT APPLICATION

(11) **EP 2 290 533 A1**
(43) Date of publication of application: **02.03.2011**
(21) Application number: 10173305.3
(22) Date of filing: 18.08.2010
(51) Int. Cl.: G06F 9/44, G06F 3/048

(54) **Method and system for managing widgets in portable terminal**

(30) Priority: 01.09.2009 KR 20090081800
(71) Applicant: Samsung Electronics Co., Ltd., Suwon-si, Gyeonggi-do (KR)
(72) Inventor: Jeon, Woo Jin, Suwon-si, Gyeonggi-do (KR); Watanabe, Masato, Suwon-si, Gyeonggi-do (KR); Kim, Jae Woo, Suwon-si, Gyeonggi-do (KR); Park, Ju Hee, Suwon-si, Gyeonggi-do (KR)
(74) Representative: van Westenbrugge, Andries

(57) **Abstract**

A method and system for managing widgets in a portable terminal is disclosed. If a request is made to register a widget in the widget tray having already the preset number of widgets, the lowest priority widget is removed from the widget tray. Information regarding the removed widget is stored in the reserved stack. If at least one widget is removed from the widget tray, the widget stored in the reserved stack is automatically registered in the widget tray. Accordingly, the widget tray can maintain the preset number of widgets in the widget tray.

## Description

### BACKGROUND OF THE INVENTION

### 1. Field of the Invention:

The present invention relates to portable terminals, and more particularly, to a method and system that efficiently manages widget information stored in a portable terminal.

### 2. Description of the Related Art

With the development of technology in the fields of communication and electronic devices, portable terminals can now provide a variety of functions, such as a camera function, a digital multimedia broadcasting (DMB) function, an MP3 player function, etc., as well as a voice call function. In recent years, portable terminals have also been able to provide a widget service. The widget service refers to a service that displays applications corresponding to frequently used menus on an idle screen of a portable terminal, so that users can easily access the menus, or receives information regarding weather, stocks, news, etc. from a server connected to the Internet for display.

With the variety of widget services available in the portable terminal, a method is required to conveniently manage widgets registered in the portable terminal. To this end, a widget tray is provided to register and manage widgets installed in the portable terminal. The conventional widget tray displays icons of widgets, registered in the portable terminal, on one side of the display unit, in a list. A portable terminal user can move a widget icon from the widget tray to an idle screen during a registration process into the idle screen. However, the conventional widget manage method must register all widgets, installed in the portable terminal, in the widget tray. That is, if a larger number of widgets are registered in the widget tray, the portable terminal may be overloaded. In addition, if a large number of widgets small in size are registered in the widget tray, the utility and convenience of the widget tray for managing widgets is reduced as it would be burdensome to sort and select the desired widget icon.

### SUMMARY OF THE INVENTION

The present invention has been made in view of the above problems, and provides a method and system that sets and registers the maximum number of widgets to be registered in a widget tray and registers an additional widget requested by a user in the widget tray after the lowest priority widget is deleted from the widget tray containing the maximum number of widgets.

The present invention further provides a method and system that automatically loads a widget from a reserved stack and registers it in a widget tray if a widget is removed from the widget tray so that the widget tray has less than the maximum number of widgets.

In accordance with an exemplary embodiment of the present invention, the present invention provides a method for managing widgets in a portable terminal, including: generating a widget management event, the widget management event corresponding to a registration event for registering at least one widget in a widget tray that is set with a preset number of widgets or a removal event for removing at least one of the widgets registered in the widget tray; removing at least one widget from the widget tray if the widget management event corresponds to the registration event, and registering at least one new widget requested for registration in a widget tray; and removing at least one widget requested for removal from the widget tray if the widget management event corresponds to the removal event, and registering at least one reserved widget in the widget tray in response a removal request.

In accordance with another exemplary embodiment of the present invention, the present invention provides a system for managing widgets in a portable terminal including: a display unit for displaying a widget tray having a preset number of widgets to be registered; and a controller for maintaining, if at least one widget is registered or removed in or from the widget tray, the number of widgets registered in the widget tray to the preset number of widgets.

### BRIEF DESCRIPTION OF THE DRAWINGS

The above and other aspects, features and advantages of certain exemplary embodiments of the present invention will become more apparent from the following description taken in conjunction with the accompanying drawing, in which:

FIG. 1 shows a flow chart that describes a method for managing widgets in a portable terminal according to an embodiment of the present invention;

FIG. 2 shows a flow chart that describes a method for managing widgets when a registration event occurs according to an embodiment of the present invention;

FIG. 3A to FIG. 3C show screens that describe the method of FIG. 2;

FIG. 4 shows a flow chart that describes a method for managing widgets when a removal event occurs according to an embodiment of the present invention;

FIG. 5A to FIG. 5D show screens that describe the method of FIG. 4;

FIG. 6 shows a flow chart that describes a method for setting widget protection according to an embodiment of the present invention;

FIG. 7 shows screens that describes the method of FIG. 6; and

FIG. 8 shows a schematic block diagram illustrating a portable terminal according to an embodiment of the present invention.

### DETAILED DESCRIPTION OF THE INVENTION

Hereinafter, exemplary embodiments of the present invention are described in detail with reference to the accompanying drawings. For the purposes of clarity and simplicity, detailed descriptions of well-known functions and structures incorporated herein may be omitted to avoid obscuring the subject matter of the present invention.

Prior to explaining the embodiments of the present invention, it should be noted that the terms or words described in the present description and the claims should not be limited by a general or lexical meaning, instead should be analyzed as a meaning and a concept through which the inventor defines and describes the present invention at his most effort, to comply with the idea of the present invention. Therefore, one skilled in the art will understand that the embodiments disclosed in the description and configurations illustrated in the drawings are only preferred embodiments, instead there may be various modifications, alterations, and equivalents thereof to replace the embodiments at the time of filing this application.

The term 'widget' refers to an application for executing a particular function of a portable terminal on an idle screen The 'widget' also refers to an 'image' or an 'icon' that corresponds to information downloaded from a server connected to the Internet and is displayed on the idle screen of the portable terminal. Examples of the widget are a weather widget, a news widget, a time widget, a subway route widget, etc. These widgets are registered in the widget tray or set to be enabled in the idle screen of the portable terminal.

The term 'widget tray' refers to a region where widgets are registered. The widget tray can be set to appear at one side on the display unit or to disappear from the display unit according to a user's selection. The maximum number of widgets to be registered in the widget tray can be determined according to the performance of the portable terminal and a user's selection. The widget tray may array and display information regarding widgets according to priority, for example, recently registered widgets, recently used widgets, and frequency of used widgets.

The term 'reserved stack' serves to store information regarding widgets that are automatically removed from the widget tray due to the limitation of the maximum number of widgets to be registered or allowed in the widget tray. In the embodiment of the present invention, the reserved stack can automatically store widget information in a Last-In-First-Out (LIFO) method. It should be, however, understood that the present invention is not limited to the embodiment. In addition, the reserved stack may be configured in such a way to store only index information regarding widgets removed from the widget tray.

The term 'widget management event' includes a registration event for registering a new widget in a widget tray and a removal event for removing a registered widget from the widget tray. The registration event may be an event for registering a new widget, downloaded from a particular server, by installing it in the portable terminal or an event for moving one of the widgets appearing on an idle screen to the widget tray. The removal event may be an event for uninstalling a particular widget from the portable terminal, an event for removing a registered widget from the widget tray, or an event for moving a particular widget from the widget tray to an idle screen.

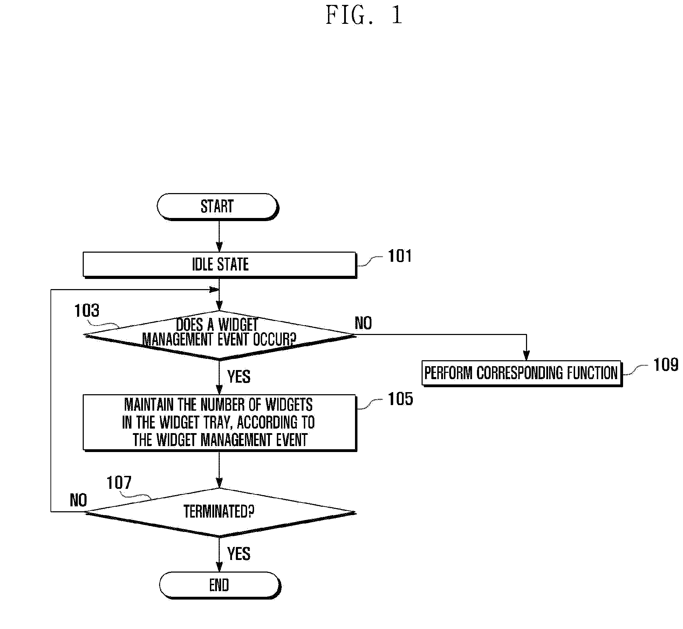

FIG. 1 shows a flow chart that describes a method of managing widgets in a portable terminal according to an embodiment of the present invention.

It is assumed that the maximum number of widgets is registered in the widget tray, according to a user's selection or the installation order of widgets installed in the portable terminal.

Referring to FIG. 1, during an idle state (101), the portable terminal determines whether a widget management event occurs (103). The widget management event includes a registration event for registering at least one particular widget in a widget tray and a removal event for removing at least one widget from the widget tray. The registration event includes an event for registering a new widget, downloaded from a particular server, by installing it in the portable terminal and an event for moving one of the widgets appearing on an idle screen to the widget tray. The removal event includes an event for uninstalling a particular widget from the portable terminal, an event for removing a registered widget from the widget tray, and an event for moving a particular widget from the widget tray to an idle screen.

If the portable terminal ascertains that a widget management event has not occurred at step 103, the terminal performs a corresponding function (109). For example, the portable terminal may conduct an audio playback function, an image capturing function, or the like, according to a user's selection, or may be operated in an idle mode. In contrast, if the portable terminal ascertains that a widget management event has occurred at step 103, it maintains the widgets, as the present number of widgets, in the widget tray, in response to the widget management event (105). For example, if the portable terminal ascertains that the number of widgets to be registered in the widget tray according to the occurrence of a registration event exceeds the preset number of widgets, it can automatically remove a widget registered in the widget tray, to correspond to the number of the widgets requested for registration. Alternatively, if the widget tray contains less the number of widgets than the preset number of widgets after removing widgets according to the occurrence of a removal event, the portable terminal can automatically load a corresponding number of widgets from a reserved stack and register them in the widget tray. Through this process, the widget tray can maintain the preset number of widgets in the widget tray.

Thereafter, the portable terminal determines whether a termination command is input (107). If the portable terminal ascertains that a termination command has been input at step 107, it terminates the widget management procedure. If the portable terminal ascertains that a termination command has not been input at step 107, it returns to and proceeds with step 103.

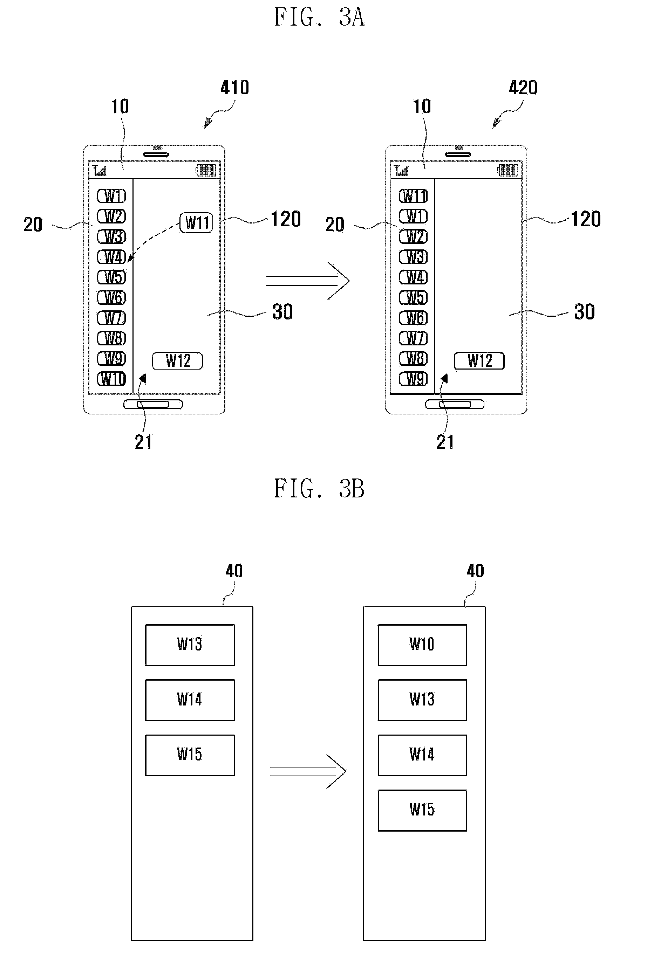

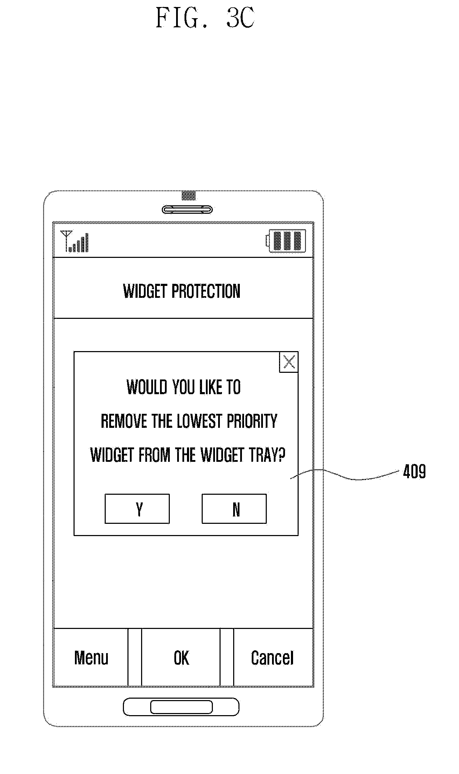

In the foregoing description, the widget managing method has been explained. The following description provides detailed methods for managing widgets according to the registration and removal events, with reference to FIGS. 3 to 4 and FIGS. 5A to 5D.

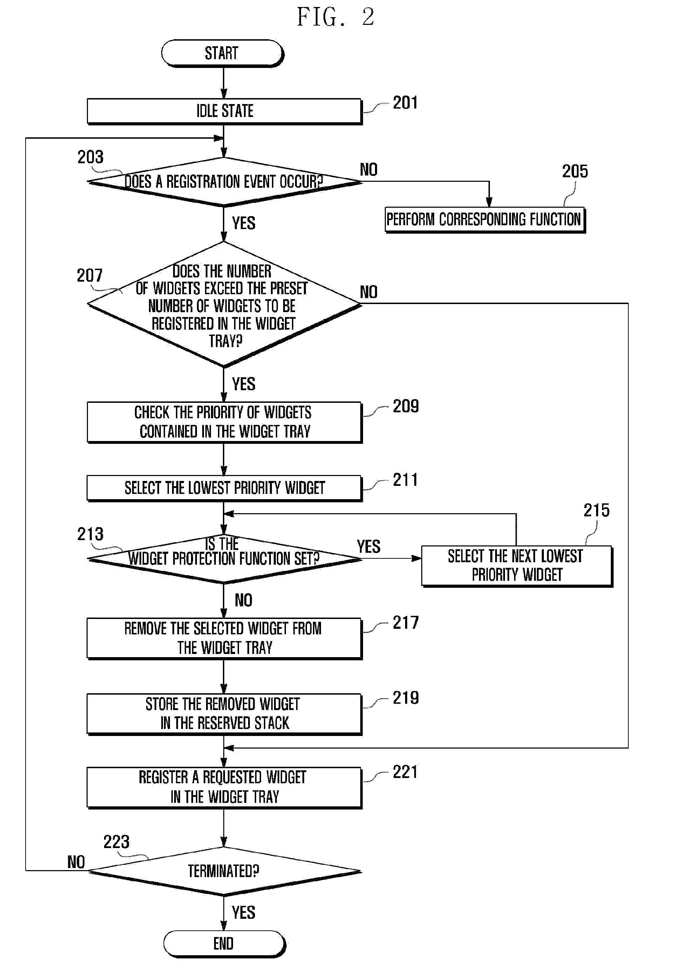

FIG. 2 shows a flow chart that describes a method for managing widgets when a registration event occurs according to an embodiment of the present invention.

Referring to FIG. 2, during an idle state (201), the portable terminal determines whether a registration event for registering at least one widget in the widget tray occurs (203). The registration event includes an event for registering a new widget, downloaded from a particular server, by installing it in the portable terminal and an event for moving one of the widgets appearing on an idle screen to the widget tray.

If the portable terminal ascertains that a registration event has not occurred at step 203, it performs a corresponding function (205). For example, the portable terminal may perform a widget management procedure according to a removal event, which will be explained later, or conduct an audio playback function, an image capturing function, or the like, according to a user's selection. On the contrary, if the portable terminal ascertains that a registration event has occurred at step 203, it determines whether the current number of widgets in the widget tray exceeds the preset number of widgets (207).

If the portable terminal ascertains that the current number of widgets in the widget tray exceeds the preset number of widgets, i.e., the maximum number of widgets at step 207, it identifies the priority order of widgets registered in the widget tray (209). After that, the portable terminal selects widgets from the lowest priority corresponding to the number of widgets requested for registration (211). The priority order may also include a registration order of widgets, a recently used order of widgets, the most use frequency order of widgets, etc. Here, if the portable terminal ascertains that the current number of widgets in the widget tray exceeds the preset number of widgets at step 207, it may inform the user that the current number of widgets exceeds the present number of widgets and then determines whether to remove the registered widgets from the widget tray. If the portable terminal ascertains that the user has selected to remove the registered widgets from the widget tray, it performs step 209. On the contrary, if the portable terminal ascertains that the user has selected not to remove the registered widgets from the widget tray, it installs a new widget in the widget tray if an event for installing the new widget occurs or displays a message informing that the widget cannot be moved from the idle screen to the widget tray if an event for moving the widget from the idle screen occurs.

After selecting the lowest priority widget at step 211, the portable terminal determines whether the selected widget is set with a protection function (213). If the portable terminal ascertains that the selected widget has been set with a protection function at step 213, it selects the next lowest priority widget (215) and then returns to step 213. On the contrary, if the portable terminal ascertains that the selected widget has not been set with a protection function at step 213, it removes the selected widget from the widget tray (217).

After that, the portable terminal stores the removed widget in a reserved stack (219) and registers the widget requested for registration in the widget tray (221). The portable terminal may register the widget requested for registration so that it can be located in the highest position in the widget tray. Alternatively, after the portable terminal removes the selected widget from the widget tray at step 217, it displays a pop-up message asking whether to store the removed widget in the reserved stack. If the user has selected to store the removed widget in the reserved stack, the portable terminal stores the removed widget in the reserved stack at step 219. If a plurality of widgets is removed from the widget tray, the procedure can be performed in such a way that all or part of the plurality of removed widgets is stored in the reserved stack.

Finally, the portable terminal determines whether a termination command is input (223). If the portable terminal ascertains that a termination command has been input at step 223, the terminal terminates the widget management procedure. On the contrary, if the portable terminal ascertains that a termination command has not been input at step 223, the terminal returns to and proceeds with step 203. Meanwhile, if the portable terminal ascertains that the current number of widgets in the widget tray does not exceed the preset number of widgets, or the maximum number of widgets at step 207, it proceeds with step 221 where it registers at least one widget requested for registration in the widget tray.

FIG. 3A to FIG. 3C show screens that describe the method of FIG. 2.

It is assumed that the maximum number of widgets to be registered in the widget tray is set to 10. For illustrative purposes, it is also assumed that ten widgets, first widget W1 to tenth widget W10, have been registered in the widget tray 20 and 11^{th} and 12^{th} widgets W11 and W12 have been registered in the idle screen area 30. It is further assumed that 13^{th} to 15^{th} widgets W13 to W15 are stored in the reserved stack 40.

Referring to FIGS. 3A to 3C, the display unit 120 of the portable terminal displays an indicator area 10, an idle screen area 30, and a widget tray 20. The indicator area 10 displays received signal strength indicator (RSSI) information, remaining battery remaining amount information, time information executed function information, etc. The idle screen area 30 displays a preset background image and widgets registered by a user. The widget tray 20 displays a list of widgets installed in the portable terminal. The display unit 120 also displays a display controller 21 at one side of the screen. The user can operate the display controller 21 to overlap and display the widget tray 20 on one side of the display unit 120 or to close the widget tray 20 from the display unit 120. The widget tray 20 can array the widgets so that they can be arranged according to the registration order. For example, as shown in diagram 410 of FIG. 3A, if ten widgets, W1 to W10, have been registered in the widget tray 20, the first widget W1 located in the highest position in the widget tray 20 may be the most recently registered widget and the tenth widget W10 located in the lowest position may be the oldest registered widget.

Although the embodiment is implemented in such a way that the widget tray 20 arrays the widgets based on the order of registration, it should be understood that the present invention is not limited to the embodiment. That is, the widgets registered in the widget tray 20 may be classified and arrayed according to a user's selection, for example, the use frequency of widgets, the recently used order of widgets, etc.

The portable terminal further includes a reserved stack 40 shown in FIG. 3B. The reserved stack 40 can store information regarding the widgets that are automatically removed from the widget tray 20 when new widgets are registered in the widget tray 20 that has the maximum number of widgets already. The reserved stack 40 can store information regarding the automatically removed widgets in a Last-In-First-Out (LIFO) method. Information of widgets stored in the reserved stack 40 may be displayed in image form or icon form to the display unit.

As shown in diagram 410 of FIG. 3A, when the user moves the 11^{th} widget W11 from the idle screen area 30 to the widget tray 20, i.e., the registration event occurs, the portable terminal detects the number of widgets registered in the widget tray 20 and determines whether the number of widgets exceeds the preset number of widgets. Since the widget tray 20 has already ten widgets, i.e., the preset number of widgets, the portable terminal removes the lowest priority widget located in the lowest position, for example, the tenth widget W10, from the widget tray 20. After that, as shown in diagram 420, the portable terminal registers the 11^{th} widget W11 in the widget tray 20. The 11^{th} widget W11 may be located in the highest position in the widget tray 20. That is, the portable terminal automatically removes the lowest priority widget, the tenth widget W10, from the widget tray 20 and then registers the 11^{th} widget W11 that the user requests for registering in the widget tray 20, so that the widget tray 20 can constantly maintain the number of widgets. The lowest priority widget removed from the widget tray 20, the tenth widget W10, is stored in the reserved stack 40 as shown in FIG. 3B. The reserved stack 40 may be configured in such a way to store only index information regarding the widgets automatically removed from the widget tray 20, for sake of storage efficiency.

The embodiment may be modified in such a way that, if the user requests to register widgets in the widget tray 20 already having the preset number of widgets, the portable terminal further displays a pop-up message informing that the widget tray 20 does not have space for registering a widget. For example, as shown in FIG. 3C, if the portable terminal receives a request for requesting a new widget in the widget tray 20, the terminal can display a pop-up window 409 saying "The preset number of widgets has been exceeded. Would you like to remove the lowest priority widget and then register an additional widget?"

Although the embodiment is implemented in such a way that a particular widget is moved from the idle screen area 30 to the widget tray 20, it should be understood that the present invention is not limited to the embodiment. For example, the embodiment can be modified in such a way that the portable terminal registers a widget in the widget tray 20 by downloading the widget from a particular server and installing it. In that case, the portable terminal can automatically remove the lowest priority widget from the widget tray 20 and store it in the reserved stack 40, thereby registering the downloaded and installed widget in the widget tray 20.

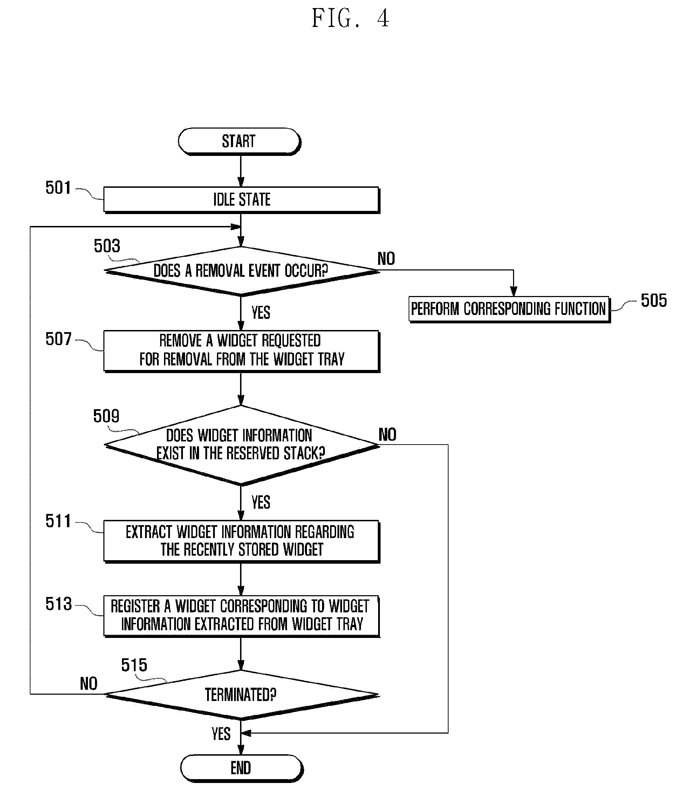

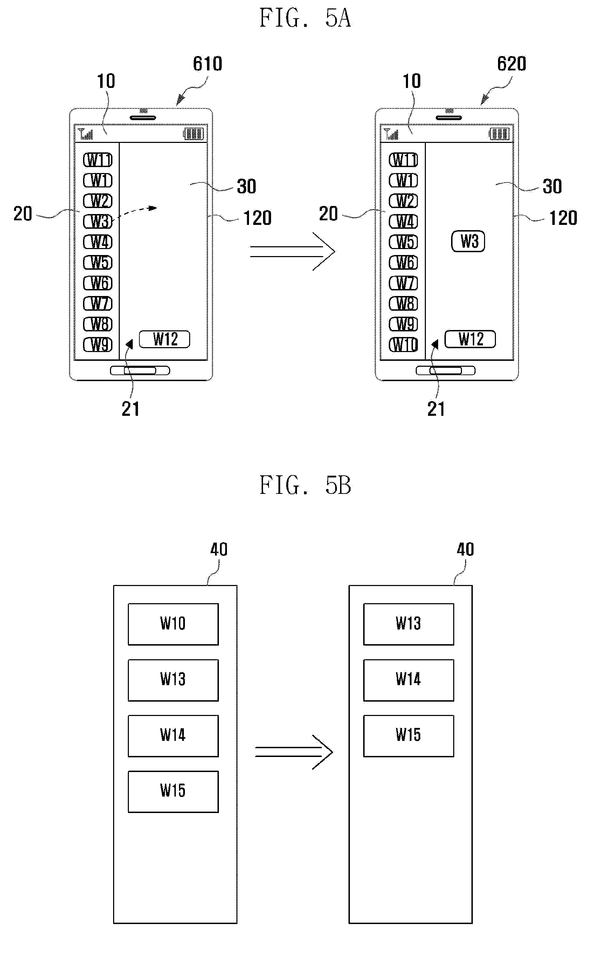

In the foregoing description, the widget management method has been explained according to the occurrence of a registration event. The following description provides a widget management method according to the occurrence of a removal event with reference to FIG. 4 and FIGS. 5A to 5D.

FIG. 4 shows a flow chart that describes a method for managing widgets when a removal event occurs according to an embodiment of the present invention. FIG. 5A to FIG. 5D show screens that describe the method of FIG. 4.

Referring to FIG. 4 and FIGS. 5A to 5D, the portable terminal is operated in an idle state (501). The portable terminal determines whether a removal event for removing at least one widget in the widget tray occurs (503). The removal event includes an event for removing a particular widget from the widget tray 20 by uninstalling the selected widget for removal from the portable terminal, an event for removing at least one widget registered in the widget tray 20, and an event for moving a particular widget from the widget tray 20 to an idle screen area 30. In the following description, the embodiment is explained based on the removal event for moving a particular widget from the widget tray 20 to the idle screen area 30.

If the portable terminal ascertains that a removal event has not occurred at step 503, it performs a corresponding function (505). For example, the portable terminal may perform an audio playback function, an image capturing function, a text message writing function, or the like, according to a user's request. On the contrary, if the portable terminal ascertains that a removal event has occurred at step 503, i.e., the third widget W3 is moved from the widget tray 20 to the idle screen area 30 as shown in diagram 610 of FIG. 5A, the terminal removes the third widget W3 from the widget tray 20 (507). In that case, since the portable terminal removed the third widget W3 without a request for registering a new widget, it does not store the information regarding the removed particular widget in the reserved stack 40. Since the reserved stack 40 has already been explained in detail above, its description is omitted below.

After that, the portable terminal determines whether information regarding at least one widget exists in the reserved stack 40 (509). If the portable terminal ascertains that information regarding at least one widget exists in the reserved stack 40 at step 509, it extracts information regarding the widget from the reserved stack 40 (511). In that case, the portable terminal can extract information regarding the widget recently stored in the reserved stack 40. For example, as shown in FIG. 5B, if the reserved stack 40 has stored the 10^{th} widget W10, the 13^{th} widget W13, the 14^{th} widget W14, and the 15^{th} widget W15, in order, the portable terminal can extract the information regarding the 10^{th} widget W10.

After extracting the information regarding the widget at step 511, the portable terminal registers the widget corresponding to the extracted widget information, for example, the 10^{th} widget W10, in the widget tray 20 (513). In that case, as shown in diagram 620 of FIG. 5A, the 10^{th} widget W10 can be registered to be located in the lowest position in the widget tray 20. On the contrary, if the portable terminal ascertains that information regarding at least one widget does not exist in the reserved stack 40 at step 509, the terminal terminates the widget management procedure according to the removal event.

Alternatively, in a modified embodiment, if the portable terminal ascertains that information regarding at least one widget does not exist in the reserved stack 40 at step 509, the terminal informs the user that the information regarding at least one widget does not exist in the reserved stack 40 and allows the user to register information regarding another widget in the widget tray 20. For example, the portable terminal displays a list of widgets that are not registered in the widget tray 20 and registers one of the widgets in a list, selected by the user, in the widget tray 20. Therefore, although widget information does not exist in the reserved stack 40, the widget tray 20 can maintain the number of widgets corresponding to the preset number of widgets.

After that, the portable terminal determines whether a termination command is input (515). If the portable terminal ascertains that a termination command has been input at step 515, the terminal terminates the widget management procedure. On the contrary, if the portable terminal ascertains that a termination command has not been input at step 515, it returns to and proceeds with step 503.

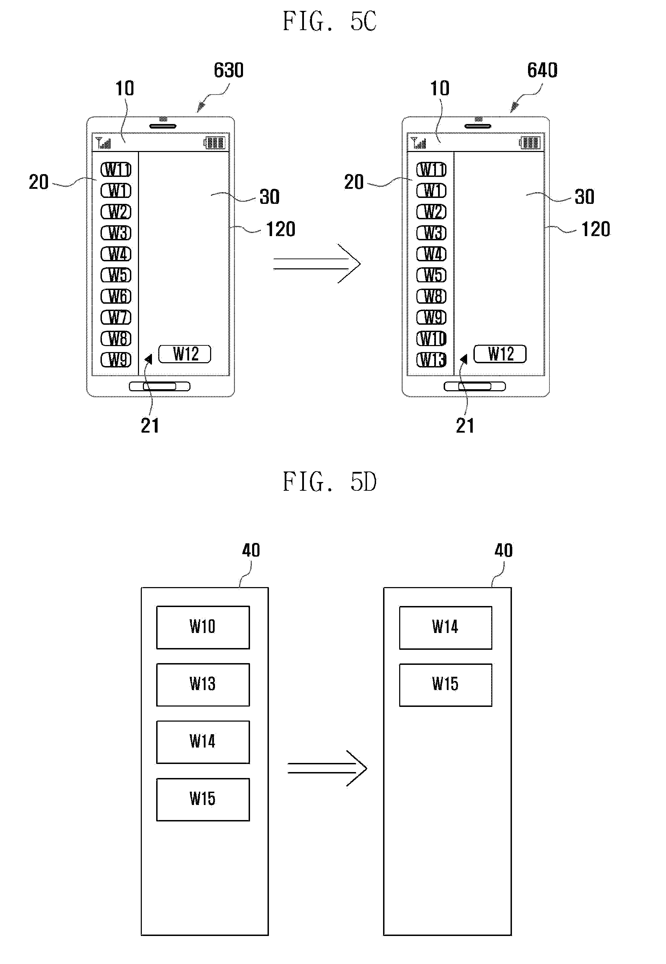

Although the embodiment has been explained in such a way that one widget is removed from the widget tray 20, it should be understood that the present invention is not limited to the embodiment. For example, as shown in diagram 630 of FIG. 5C, if the user simultaneously removes two widgets for example, the 6^{th} widget W6 and the 7^{th} widget W7, the portable terminal can extract information regarding two widgets from the reserved stack 40, for example, the 10^{th} widget W10 and the 13^{th} widget W13, as shown in FIG. 5D. After that, as shown in diagram 640 of FIG. 5C, the portable terminal removes the 6^{th} widget W6 and 7^{th} widget W7 from the widget tray 20 and registers the extracted 10^{th} and 13^{th} widgets W10 and W13 in the widget tray 20. In that case, as shown in diagram 640 of FIG. 5C, if the removal event is not an event for moving a widget from the widget tray 20 to the idle screen area 30, the removed widgets W6 and W7 are not displayed on the idle screen area 30.

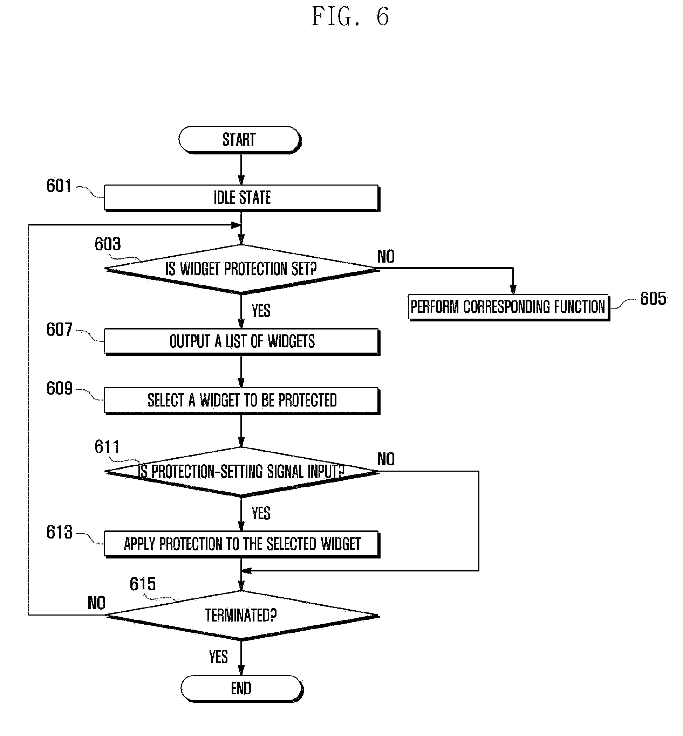

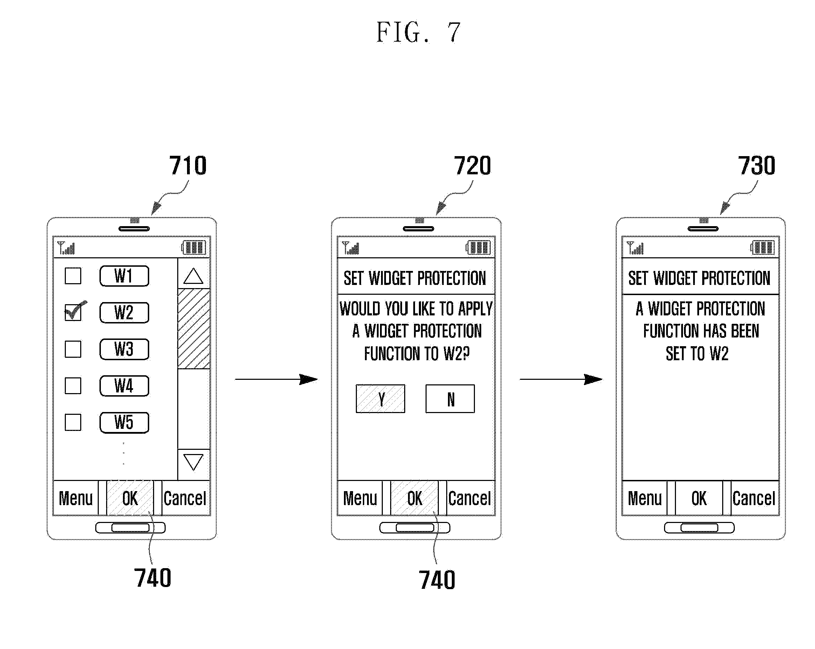

In the foregoing description, the widget management method according to the occurrence of a removal event has been explained. The following description provides a method for setting protection for a particular widget registered in the widget tray 20 with reference to FIGS. 6 and 7.

FIG. 6 shows a flow chart that describes a method for setting widget protection according to an embodiment of the present invention. FIG. 7 shows screens that describes the method of FIG. 6.

Referring to FIGS. 6 and 7, the portable terminal is operated in an idle state (601). The portable terminal determines whether a widget protection setting is activated (603). The widget protection refers to preventing the prohibition of storing a widget in the reserved stack 40, where the widget can be automatically removed from the widget tray 20 according to a request for registering a new widget in the widget tray 20.

If the portable terminal ascertains that a widget protection setting is not activated at step 603, it performs a corresponding function (605). For example, the portable terminal may perform an audio playback function, a text message writing function, or the like, according to a user's request. On the contrary, if the portable terminal ascertains that a widget protection setting is activated at step 603, the terminal displays a list of widgets contained in the widget tray 20 (607). For example, if the widget protection setting menu is activated, the portable terminal displays a list of widgets registered in the widget tray 20 as shown in diagram 710 of FIG. 7.

After that, the user can select a widget to be protected via an input unit, such as direction keys (not shown) and a confirmation key (not shown). Alternatively, if the display unit 120 of the portable terminal is implemented with a touch screen, a widget to be protected can be selected by a user's finger or a stylus pen. After selecting a widget to be protected, the portable terminal determines whether a signal for setting widget protection is input (611). The signal for setting widget protection is input by operating the confirmation key. Alternatively, if the display unit 120 is implemented with a touch screen, the signal for setting widget protection can also be input by touching a confirmation key region 740 as shown in FIG. 7. If the portable terminal ascertains that a signal for setting widget protection is input at step 611, the terminal applies protection to the selected widget at step 609 (613). For example, if a signal for setting widget protection is input, the portable terminal displays a pop-up window asking whether to set a protection function as shown in diagram 720 of FIG. 7. If the user selects yes 'Y', the portable terminal displays a message informing that protection has been set to the widgets selected at step 609 for a certain period of time.

After protection has been set to widgets at step 611, the portable terminal determines whether a termination command is input (615). If the portable terminal ascertains that a termination command has been input at step 615, the terminal terminates the widget management procedure. On the contrary, if the portable terminal ascertains that a termination command has not been input at step 615, the terminal returns to and proceeds with step 603. Meanwhile, if the portable terminal ascertains that a signal for setting widget protection is not input at step 611, the terminal proceeds with step 615. Therefore, if the user sets the widget protection function to prevent widgets from being automatically removed, the widget tray 20 can maintain and show the widgets that the user requires.

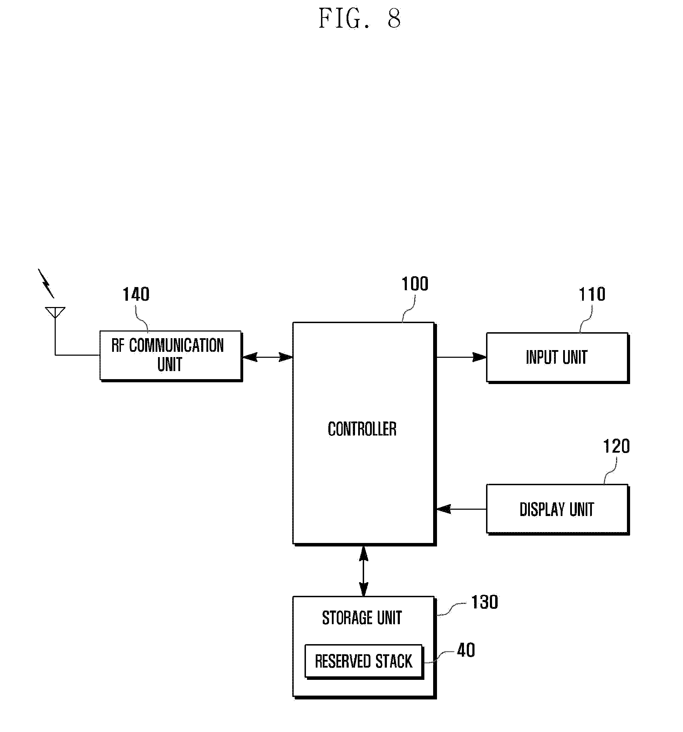

In the foregoing description, the embodiments of the widget management method according to the present invention have been explained. The following description provides a portable terminal adapted to the widget management method with reference to FIG. 8.

Note that although the portable terminal according to the present invention is described based on a terminal providing a widget service, it will be appreciated that the portable terminal can be applied to all information communication devices, multimedia devices, and their applications, such as, a personal digital assistant (PDA), a smart phone, an international mobile telecommunication 2000 (IMT-2000) terminal, a code division multiple access (CDMA) terminal, a wideband code division multiple access (WCDMA) terminal, a global system for mobile communication (GSM) terminal, a High Speed Downlink Packet Access (HSPDA) terminal, a World Interoperability for Microwave Access (WiMAX) terminal, a universal mobile telecommunication service (UMTS) terminal, a personal computer, a laptop computer, etc.

FIG. 8 shows a schematic block diagram illustrating a portable terminal according to an embodiment of the present invention.

Referring to FIG. 8, the portable terminal includes an input unit 110, a display unit 120, a storage unit 130, an RF communication unit 140, and a controller 100.

The input unit 110 receives information, signals related to the settings for a variety of functions and control signals of the portable terminal, and outputs them to the controller 100. The input unit 110 can further include a separate touch pad according to types of portable terminals. The input unit 110 can be implemented with one of the touch pad, the touch screen, and the keypad with a general key arrangement or a QWERTY key arrangement, together with function keys for performing particular functions, or a combination thereof. In the embodiment of the present invention, the input unit 110 generates an input signal corresponding to a registration event for registering widgets in a widget tray or a removal event for removing widgets from the widget tray and outputs it to the controller 100. The input unit 110 outputs an input signal related to the widget protection settings to the controller 100.

The display unit 120 displays screen data, generated when the portable terminal is operated, information regarding states according to a user's input event or a user's key operation, function settings information of the portable terminal, etc. The display unit 120 may be implemented with a liquid crystal display (LCD), an organic light emitting diode (OLED), or the like. If the display unit 120 is implemented with a touch screen, it may also serve as an input device. In the embodiment of the present invention, the display unit 120 displays widgets registered by a user on an idle screen. The display unit 120 displays a widget tray 20 containing widgets registered by the user on one side of the screen. The display unit 120 also displays a display controller 21 for opening or closing the widget tray 20 on one side of the screen. If the display unit 120 is implemented with a touch screen, the user can touch the display controller 21 to overlay and display the widget tray 20 on one side of the display unit 120. Likewise, if the user touches the display controller 21 on the screen on which the widget tray 20 is being displayed, the widget tray 20 is closed and disappears from the screen.

The storage unit 130 stores an operating system (OS) for booting the portable terminal and application programs, for example, an application for performing a widget service. The storage unit 130 also stores user data generated when the portable terminal is operated. To this end, the storage unit 130 may be configured to include a program storage area and a data storage area. In the embodiment of the present invention, the program storage area stores a program for registering a particular widget in the widget tray 20, a program for acquiring information regarding a particular widget removed from the widget tray 20, for example, index information, and a program for seeing protection to a particular widget. The data storage area stores data generated when the application programs are operated, user input data, etc. In the embodiment of the present invention, the data storage area stores information regarding widgets registered in the widget tray 20. The data storage area also stores information regarding the priority order of the widgets registered in the widget tray 20. The priority order can be set according to a recently used order of widgets, a registered order of widgets, a use frequency of widgets, etc. To this end, the data storage area stores time and date of registering each widget, time and data of recently using each widget, a preset period of time (for example, one week, one month, etc.), a use frequency of each widget that has been used to the present since installation.

The storage unit 130 also includes a reserved stack 40. The reserved stack 40 stores information regarding a widget. The widget corresponds to the lowest priority widget in the widget tray 20 and is removed from the widget tray 20 when a new widget is registered in the widget tray 20 according to the occurrence of a registration event so that the widget tray 20 can maintain the preset number of widgets. Since reserved stack 40 stores only index information regarding the widget removed from the widget tray 20, the reserved sack does not need to be a substantially large. The reserved stack 40 can store the index information in a LIFO method. The reserved stack 40 serves to provide the index information regarding the removed widget in order to register the removed widget in the widget tray 20 again.

The RF communication unit 140 transmits and receives signals related to a short message service (SMS), a multimedia message service (MMS), a voice call service, a data communication service, etc., to and from an external system. The RF communication unit 140 converts voice/audio data and control data into RF signals and transmits them to an external system. The RF communication unit 140 also converts RF signals, transmitted from an external system, into voice/audio data and control data and output them to corresponding element in the portable terminal. To this end, the RF communication unit 140 includes an RF transmitter for up-converting the frequency of signals to be transmitted and amplifying the signals and an RF receiver for low-noise amplifying received RF signals and down-converting the frequency of the received RF signals. In the embodiment of the present invention, the RF communication unit 140 downloads widgets from a particular service according to a user's request. The RF communication unit 140 can receive data in real time from a corresponding while the portable terminal is providing a widget service. For example, if a weather widget is being executed, the RF communication unit 140 receives weather information from a weather information providing server and outputs it to the controller 100.

The controller 100 controls the entire operation of the portable terminal. In the embodiment of the present invention, the controller 100 can control to maintain the widget tray 20 to regularly maintain the number of widgets when at least one widget is registered or removed in or from the widget tray 20. For example, the controller 100 can display the widget tray 20 with the maximum number of widgets (for example, 10) on one side of the display unit 120, according to a user's selection. After that, if a registration event occurs that installs a widget, downloaded from a particular server, in the widget tray 20 with the maximum number of widgets (for example, 10) or moves a widget from an idle screen to the widget tray 20, the controller 100 automatically removes the lowest priority widget from the widget tray 20 because the widget to be registered in the widget tray 20 makes it to exceed the maximum number of widgets in the widget tray 20. The controller 100 controls the reserved stack 40 to store information regarding the automatically removed widget. After that, the controller 100 registers the registration-requested widget in the widget tray 20. In that case, the controller 100 can register the registration-requested widget in the highest position of the widget tray 20. Through this process, the controller 100 can control the widget tray 20 to regularly maintain the preset number of widgets.

The controller 100 may perform a control operation in such a way that: a pop-up message is displayed to ask whether to remove the lowest priority widget from the widget tray 20 before the automatic removal of the lowest priority widget; the lowest priority widget is automatically removed if a user selects to remove the lowest priority widget; and a widget requested for registration is registered in the widget tray 20. On the contrary, if the user selects not to remove the lowest priority widget, the controller 100 installs the widget in the portable terminal, according to an event for installing a new widget, without registering the widget in the widget tray, or displays a messaging showing that the widget cannot be moved from the idle screen to the widget tray 20, according to an event for moving the widget from the idle screen to the widget tray 20. When a lower priority widget is selected and automatically removed, the controller 100 determines whether the selected widget is set with protection, so that it can remove a non-protected widget.

If the controller 100 detects a removal event that uninstalls a particular widget to remove it from the widget tray 20, removes a particular widget from the widget tray 20, or moves a widget from the widget tray 20 to the idle screen area 30, it removes at least one widget corresponding to the removal event from the widget tray 20. In that case, the controller 100 does not store information regarding the removed widget in the reserved stack 40. After that, the controller 100 determines whether widget information exists in the reserved stack 40. If the controller 100 ascertains that widget information exists in the reserved stack 40, it extracts the widget information therefrom. In that case, the controller 100 can extract widget information that has recently been stored in the reserved stack 40. After that, the controller 100 registers a widget corresponding to the extracted widget information, called an extracted widget, in the widget tray 20. In that case, the controller 100 can register the extracted widget in the lowest position of the widget tray 20.

As described above, the method and system for managing widgets in a portable terminal according to the present invention, limits the maximum number of widgets to be registered in the widget tray, thereby preventing the overload of the portable terminal, and displays frequently used or recently registered widgets in the widget tray, thereby providing use and interface convenience. In addition, the method and system can automatically resister a widget, stored in the reserved stack, in the widget tray if a particular widget is removed from the widget tray and can remove a widget, registered in the widget tray, from the widget tray, based on a preset priority order when a request is made to register a new widget, thereby maintaining the number of widgets in the widget tray. Therefore, the system and method can prevent the overload of the portable terminal, due to the registration of a large number of widgets, and can provide use convenience for managing widgets.

Note that the above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

Although the invention has been shown and described with respect to exemplary embodiments thereof, it should be understood that these embodiments are only illustrative and not intended to limit the scope of the invention. Therefore, one skilled in the art will understand that the embodiments disclosed in the description and configurations illustrated in the drawings are only preferred embodiments, instead there may be various modifications, alterations, and equivalents thereof, without departing from the scope and sprit of the invention as described in the accompanying claims.

## Claims

1. A method for managing widgets in a portable terminal, **characterized by**:
generating a widget management event, the widget management event corresponding to a registration event for registering at least one widget in a widget tray that is set with a preset number of widgets or a removal event for removing at least one of the widgets registered in the widget tray;
removing at least one widget from the widget tray if the widget management event corresponds to the registration event, and registering at least one new widget requested for registration in a widget tray; and
removing at least one widget requested for removal from the widget tray if the widget management event corresponds to the removal event, and registering at least one reserved widget in the widget tray in response a removal request.

2. The method of claim 1, wherein the removing at least one widget from the widget tray comprises:
determining (207), if the registration event has occurred, whether a current number of widgets available in the widget tray exceeds the preset number of widgets;
automatically removing (217), if the current number of widgets exceeds the preset number of widgets in the widget tray, the at least one of the widgets from the widget tray; and
registering (221) at least one new widget requested for registration in the widget tray.

3. The method of claim 2, wherein automatically removing the at least one of the widgets from the widget tray comprises:
identifying (209) a priority order of widgets registered in the widget tray; and
selecting (211) at least one widget based on the priority order for removal.

4. The method of claim 3, wherein automatically removing the at least one of the widgets from the widget tray comprises:
determining (213) whether widget a protection is applied to the selected widgets;
and
removing (217) the selected widgets if widget protection is not applied.

5. The method of claim 2, wherein automatically removing the at least one of the widgets from the widget tray further comprises:
informing a user that the preset number of widgets exceeds; and
determining which part of the widgets is to be removed from the widget tray.

6. The method of claim 2, further comprising:
storing (219) information regarding the automatically removed widget in a reserved stack.

7. The method of claim 6, wherein the registering reserved widgets comprises:
removing (507) the at least one widget requested for removal from the widget tray;
extracting (511) information regarding widgets stored in the reserved stack for the removal request; and
registering (513) the widgets corresponding to the extracted widget information in the widget tray.

8. The method of claim 1, wherein:
the registration event comprises at least one of an event for moving a widget from an idle screen to the widget tray and an event for installing a particular widget in the portable terminal; and
the removal event comprises at least one of an event for moving at least one widget from the widget tray to an idle screen, an event for removing at least one widget installed in the portable terminal, and an event for removing at least one widget from only the widget tray.

9. A system for managing widgets in a portable terminal, comprising:
a display unit (120) for displaying a widget tray (20) having a preset number of widgets to be registered; and
a controller (100) for maintaining, if at least one widget is registered or removed in or from the widget tray (20), the number of widgets registered in the widget tray (20) to the preset number of widgets.

10. The system of claim 9, wherein the controller (100):
determines, when a registration event occurs that registers at least one widget in the widget tray (20), whether a current number of widgets in the widget tray and the at least one widgets being registered exceeds the preset number of widgets,
automatically removes, if the current number of widgets exceeds the preset number of widgets in the widget tray after the registration, at least one widget from the widget tray to maintain the preset number of widgets in response to a registration request,
registers the at least one widget requested for registration in the widget tray (20),
and
stores information regarding the automatically removed widget in a reserved stack (40) of a storage unit (130).

11. The system of claim 10, wherein:
the information regarding the automatically removed widget comprises index information, wherein the reserved stack (40) stores the index information in a Last-In First-Out (LIFO) method.

12. The system of claim 10, wherein the controller (100) registers the widget requested to be registered at a highest position of the widget tray (20).

13. The system of claim 10, wherein the controller (100) displays a message (409) requesting whether to remove a widget from the widget tray (20) before the automatic removal.

14. The system of claim 10, wherein the controller (100) determines whether a widget protection is applied and only removes non-protected widgets from the widget tray (20).

15. The system of claim 10, wherein, when the controller (100) removes at least one widget registered in widget tray (20), the controller (100) registers at least one widget stored in the reserved stack (40) back in the widget tray (20).
